# EUROPÄISCHE PATENTSCHRIFT

(11) **EP 2 277 368 B1**
(45) Veröffentlichungstag und Bekanntmachung des Hinweises auf die Patenterteilung: **08.07.2015**
(21) Anmeldenummer: 10004997.2
(22) Anmeldetag: 12.05.2010
(51) Int. Cl.: A01C 17/00

(54) **Schleuderstreuer für rieselfähiges Streugut**
Centrifugal spreader for pourable materials
Epandeur d'engrais centrifuge pour des matériaux coulants

(30) Priorität: 29.05.2009 DE 102009023257
(43) Veröffentlichungstag der Anmeldung: 26.01.2011
(73) Patentinhaber: RAUCH Landmaschinenfabrik GmbH, 76547 Sinzheim (DE)
(72) Erfinder: Doll, Franz, 76547 Sinzheim (DE); Gushurst, Hans, 76547 Sinzheim (DE)
(74) Vertreter: Lasch, Hartmut

(56) Entgegenhaltungen:
- EP-A1- 0 281 886
- EP-A1- 0 635 196
- EP-A2- 0 433 562
- EP-A2- 0 791 286

## Beschreibung

Die Erfindung betrifft einen Schleuderstreuer für rieselfähiges Streugut mit einem Vorratsbehälter mit wenigstens einer Auslauföffnung und einer dieser zugeordneten Dosiereinrichtung und wenigstens einer Wurfscheibe, die unterhalb der Dosiereinrichtung umläuft und wenigstens einen zweiteiligen Wurfflügel aufweist, dessen inneres Flügelteil zur Anstellung des Wurfflügels in der Scheibenebene nahe dem Zentrum der Wurfscheibe schwenkbar gelagert und mit Abstand davon in der Wurfscheibe in einer Führung geführt ist und dessen äußeres Flügelteil gegenüber dem inneren mittels eines Langlochs zur Einstellung der Flügellänge verschiebbar geführt ist, wobei die Führungen an der Wurfscheibe und an dem äußeren Flügelteil einander kreuzend angeordnet sind und ein einziges Feststellmittel mit einem beide Führungen im Kreuzungspunkt durchgreifenden Rastmittel vorgesehen ist und dem Verstellbereich für die Winkellage des Wurfflügels und für die Flügellänge Markierungen mit jeweils verschiedenen Symbolen zugeordnet sind.

Schleuderstreuer dieses Aufbaus dienen insbesondere in der Landwirtschaft zum Verteilen von Dünger. Dabei muss der Schleuderstreuer an verschiedene Einsatzbedingungen angepasst werden können, z.B. für das Normaldüngen, Spätdüngen oder Grenzstreuen etc. Ferner muss die Streubreite der einzelnen Schleuderscheiben zur Einstellung verschiedener Arbeitsbreiten variabel sein.

Um diesen verschiedenen Einsatzbedingungen gerecht zu werden, sind die Wurfflügel an der Wurfscheibe in mehrfacher Hinsicht verstellbar. Sie bestehen zu diesem Zweck aus zwei Flügelteilen, von denen das innere mit seinem inneren Ende an der Scheibe schwenkbar gelagert ist, während das äußere Flügelteil an dem inneren verschiebbar geführt ist. Durch Verschwenken des inneren Flügelteils und damit des gesamten Wurfflügels kann der Anstellwinkel des Wurfflügels in der Scheibenebene variiert werden. Damit lässt sich der Flügel in eine vorgestellte oder zurückgestellte Position und damit der Abflugpunkt der Streugutpartikel auf der Umlaufbahn der Wurfflügel einstellen. Durch die verschiebbare Führung des äußeren Flügelteils am inneren lässt sich die Länge des Wurfflügels variieren und damit dessen äußere Kante, die zugleich die Abflugkante für die Streugutpartikel bildet, in unterschiedlichem Abstand vom Zentrum der Scheibe bzw. der Auslauföffnung einstellen und dadurch insbesondere die Arbeitsbreite variieren. Durch diese Einstellmöglichkeiten, insbesondere auch in ihrer Kombination, lässt sich der Schleuderstreuer allen Einsatzbedingungen anpassen.

Bei dem eingangs genannten und den Oberbegriff des Anspruchs 1 bildenden Schleuderstreuer (EP 0 635 196 B1) ist das innere Flügelteil in einem zu seinem Schwenkzentrum konzentrischen Langloch in der Schleuderscheibe geführt, das von einer parallelen Lochreihe umgeben ist, in der das innere Flügelteil zur Einstellung eines vorbestimmten Winkels absteckbar ist. Hierzu dient ein federbelasteter Bolzen, der entgegen der Federkraft aushebbar ist. Die Winkelstellung ist an einer mit Abstand vom Umfangsrand der Schleuderscheibe angebrachten Markierung, z.B. in Form von Buchstaben oder Zahlen ablesbar. Das am inneren Flügelteil ausziehbare äußere Flügelteil ist mittels eines Langlochs an einem nach hinten abgebogenen Schenkel des inneren Flügelteils geführt, wobei das Langloch an seinen beiden Längskanten mit teilkreisförmigen Erweiterungen versehen ist, mit denen es gleichfalls mit dem federbelasteten Bolzen zusammenwirkt. Auf diese Weise lässt sich mit demselben federbelasteten Bolzen sowohl der Winkel als auch die Länge des Wurfflügels einstellen. Die Auszugslänge ist an einer Markierung, z.B. in einer von ersterer abweichenden Form von Buchstaben oder Zahlen am nach hinten abgebogenen Schenkel des äußeren Flügelteils ablesbar. Voraussetzung für die Notwendigkeit nur eines federbelasteten Bolzens für beide Einstellungen ist, dass sich die Führungsschlitze bzw. Lochreihen kreuzen, so dass das Abstecken im Kreuzungspunkt erfolgen kann.

Trotz dieses bemerkenswerten Bedienungsvorteils hat die bekannte Lösung auch Nachteile. Die Markierungen (Buchstaben und Zahlen) sind nur schwierig einsehbar, da sich die Wurfscheiben unter dem Behälter befinden und zudem vom Umfangsrand nach innen gewölbt sind. Die Bedienungsperson muss in den Streuer "hineinkriechen", um die Markierungen erkennen und den Streuer einstellen zu können. Außerdem werden die Markierungen für die Winkeleinstellung vom ausziehbaren Flügelteil verdeckt, so dass die richtige Einstellung nur durch Abschätzung mittels der vorderen und der hinteren Markierung möglich ist. Die in der Wurfscheibe und in den Wurfflügelschenkeln durch Stempel eingebrachten Markierungen setzen sich leicht mit Staub zu und lassen sich kaum reinigen.

Eine gegen Verschmutzung günstigere Ausbildung ist bei einem Steuer geschaffen (RAUCH MDS Betriebsanleitung 5900453 -C- de-0109, Seite 61 und 110), bei dem die Markierung auf der Rückseite des ausziehbaren Flügelteils angeordnet ist. Allerdings ist auch diese Markierung wegen ihrer im Wesentlichen senkrechten Anordnung schwierig ablesbar und zudem dem Feinstaub aus den sich hinter dem Wurfflügel bildenden Luftwirbeln ausgesetzt.

Bei einem anderen bekannten Streuer mit teleskopisch verlängerbaren und winkelverstellbaren Wurfflügeln (EP 0 281 886 B1) ist eine stufenlose Einstellung sowohl der Länge als auch des Winkels vorgesehen. Damit mag der Einstellbereich erweitert werden können, doch wird dies mit dem erheblichen Nachteil erkauft, dass für beide Einstellparameter Festsetzmechanismen nach Art von Schraubverbindungen notwendig sind, was die Einstellung erheblich erschwert. Auch ist ein Verrutschen der Teile im Bereich der gewünschten Einstellung beim Ansetzen des notwendigen Werkzeugs unvermeidbar. Die Markierungen für die Längeneinstellung sind in einer vertieften Rinne angeordnet und damit besonders gegen Verschmutzung gefährdet. Ähnliche Nachteile ergeben sich bei getrennt eingelegten Skalen (EP 0 292 873 B2).

Ferner ist es bekannt, die Markierung für die Winkeleinstellung der Wurfflügel an dem nach unten abgebogenen Umfangsrand der Wurfscheibe vorzusehen (DE 38 16 824 C3). Als Ablesemarkierung dient der Rücken der Wurfschaufel. Die Winkeleinstellung ist hier besser einsehbar und die Markierung gegen Verschleiß besser geschützt, jedoch erfolgt die Einstellung auch hier stufenlos und ist ein entsprechender Festsetzmechanismus mit Schraube erforderlich. Auch ist bei dieser bekannten Ausführung keine Längenverstellung der Wurfflügel vorgesehen.

Bei einem anderen bekannten Schleuderstreuer (EP 0 791 286 A2) mit längenveränderlichen Wurfflügeln einer Grenzstreuschaufel, weist das innere schwenkbare Flügelteil einen in Drehrichtung abgebogenen oberen Schenkel auf, an dessen Oberseite die Markierung für die Einstellung der Länge angebracht ist. Die Markierung liegt in dem vom Wurfflügel beschleunigten Düngerstrom, verschleißt demzufolge schnell und ist dann nicht mehr ablesbar.
1

Schließlich sind Wurfflügel bekannt (EP 0 281 886), bei denen die Skala für die Längenverstellung auf einem in Drehrichtung nach vorne abgebogenen Schenkel des inneren Flügelteils angebracht ist. Die Skala ist damit dem Düngerstrom ausgesetzt, verschleißt dadurch schnell und wird unleserlich. Im übrigen ist die ganze Längserstreckung am oberen Wurfflügelteil vorgesehen.

Ausgehend von der den Oberbegriff des Anspruchs 1 bildenden EP 0 635 196 B1 liegt der Erfindung die Aufgabe zugrunde, ein Einstellsystem für winkel- und längenverstellbare Wurfflügel zu schaffen, bei dem der Wurfflügel für beide Einstellparameter mittels eines Bolzens werkzeuglos fixierbar ist und die jeweiligen Markierungen für die Einstellparameter gut einsehbar, staub- und schmutzunempfindlich angeordnet sind, sowie die Wurfflügel leicht und intuitiv einstellbar sind.

Diese Aufgabe wird erfindungsgemäß dadurch gelöst, dass die Markierung für den Verstellbereich der Flügellänge an einem entgegen der Drehrichtung abgewinkelten Schenkel des inneren Flügelteils angeordnet und dieser Markierung ein entgegen der Drehrichtung abgewinkelter Zeiger an dem äußeren Flügelteil zugeordnet ist, und dass die Markierung für die Winkelverstellung des Wurfflügels an dem nach außen abgebogenen Umfangsrand der Wurfscheibe angeordnet ist und ihr ein Zeiger am Ende des inneren Flügelteils zugeordnet ist.

Durch die Anordnung der Markierung für den Verstellbereich der Flügellänge auf einem entgegen der Drehrichtung abgewinkelten Schenkel des inneren Flügelteils, lässt sich diese Markierung beliebig groß und damit gut ablesbar ausführen. Die gute Ablesbarkeit wird noch dadurch gefördert, dass sich die Markierung auf erhöhtem Niveau befindet und die Ablesbarkeit nicht durch daneben oder darüber befindliche Bauteile beeinträchtigt ist. Auch der Zeiger, der an der Markierung entlangläuft, kann optisch entsprechend auffällig ausgebildet sein. Die an sich bekannte Anordnung der Markierung für die Winkeleinstellung an dem nach unten abgewobenen Umfangsrand der Wurfscheibe ermöglicht die Ablesung seitlich von oben, so dass aufgrund beider Maßnahmen ein "Hineinkriechen" in den Streuer zum Einstellen und Ablesen der Markierungen entfällt.

Der Zeiger zum Ablesen der eingestellten Flügellänge ist vorteilhafterweise scheibenparallel am äußeren Wurfflügel angeordnet.

Der Zeiger ist entgegen der Drehrichtung abgewinkelt und übergreift den abgewinkelten Schenkel des inneren Flügelteils.

Der Zeiger ist vorteilhafterweise an einem vertikalen Schenkel des äußeren Flügelteils angeordnet und entgegen der Drehrichtung abgewinkelt.

In bevorzugter Ausführung ist vorgesehen, dass sich der abgewinkelte scheibenparallele Schenkel des inneren Flügelteils in einer Höhe von etwa 30% bis 50% der Höhe des Wurfflügels befindet. Dadurch ergibt sich eine besonders günstige Ablesbarkeit der Längenmarkierung. Auch ist die Markierung der Einwirkung von Staub und Schmutz entzogen.

Bei einer weiteren Ausführungsform ist vorgesehen, dass das innere Flügelteil bis etwa zum Umfangsrand der Wurfscheibe reicht und an seinem äußeren Ende einen mit der Markierung an dem nach unten abgebogenen Umfangsrand der Wurfscheibe zusammenwirkenden Zeiger aufweist.

Der Zeiger behält also bezüglich der Markierung immer die gleiche Position in Abhängigkeit von der Winkellage des inneren Flügelteils und damit des gesamten Wurfflügels bei. Auch hier kann der Zeiger konstruktiv ausreichend prägnant ausgeführt sein, um eine einwandfreie Ablesbarkeit zu gewährleisten.

Auch das äußere Flügelteil weist am äußeren Ende einen Zeiger auf, mit dem im ausgezogenen Zustand ein optisches Ausfluchten mit der Winkel-Markierung möglich ist.

Die Sicht- und Bezugsachse für die Winkellage des Wurfflügels befindet sich hinter dem Wurfflügel, ist also insbesondere nicht durch den Wurfflügel selbst und seinen in Drehrichtung abgewinkelten Schenkel beeinträchtigt.

In bevorzugter Ausführung ist vorgesehen, dass die Führung für das schwenkbare innere Flügelteil aus einem bogenförmigen Langloch um das Schwenkzentrum gebildet ist und diesem auf Abstand angeordnete Bohrungen in der Wurfscheibe konzentrisch zugeordnet sind, mit denen der federbelastete Bolzen zum Fixieren der Winkellage zusammenwirkt und dass das äußere Flügelteil in seinem scheibenparallelen Schenkel ein sich von innen nach außen erstreckendes Langloch mit an beiden Längsrändern teilkreisförmigen Erweiterungen für den Eingriff des Rastbolzens aufweist. Die Fixierung mittels des federbelasteten Rastbolzens erfolgt hinsichtlich der Winkellage durch Abstecken des Bolzens in eines der Löcher in der Wurfscheibe, während die Einstellung der Länge durch Eingreifen des Bolzens in einer der Erweiterungen des Langlochs verwirklicht ist.

Der federnde Rastbolzen kann beispielsweise mittels eines ihn etwa radial durchsetzenden Hebels aushebbar sein, wobei der Hebel vorteilhafterweise den Umfangsrand der Wurfscheibe derart übergreift, dass er in etwa die Winkelposition anzeigt. Durch Einsetzen des Hebels und Verschwenken des inneren Flügelteils lässt sich dieses und damit der gesamte Flügel problemlos auf eine andere Winkelstellung einstellen.

In weiterhin bevorzugter Ausführung ist vorgesehen, dass in jedem ausgezogenen Zustand des äußeren Flügelteils die Markierungen auf dem nach unten gekrümmten Umfangsrand der Wurfscheibe durch das Langloch in diesem Flügelteil ablesbar sind. Auf diese Weise ist die Winkeleinstellung auch bei jeder Auszugslänge des Wurfflügels erkennbar und jede andere mögliche Position problemlos einstellbar.

Die Markierungen für die Winkelposition können Zahlen und diejenigen für die Flügellänge Buchstaben sein.

Vorzugsweise sind die Zahlen bzw. Buchstaben erhaben, so dass sie sich im Gegensatz zu eingestempelten Markierungen nicht mit Schmutz zusetzen können und im übrigen problemlos zu reinigen sind.

Die Markierungen sind ferner zweckmäßigerweise an nicht rostenden Skalen angeordnet, um den aggressiven Einsatzbedingungen zu widerstehen.

Vorzugsweise sind die Skalen an dem nach unten gebogenen Umfangsrand der Wurfscheibe bzw. an dem entgegen der Drehrichtung abgebogenen Schenkel des inneren Flügelteils angenietet.

Nachstehend ist die Erfindung anhand eines in der Zeichnung wiedergegeben Ausführungsbeispiels beschrieben. In der Zeichnung zeigen:
- Fig. 1.: eine schematische Ansicht auf die Rückseite eines Zweischeibenstreuers;
- Fig. 2.: eine Draufsicht auf die beiden Wurfscheiben in ihrer Bezugslage zu den Auslauföffnungen bzw. den Dosiereinrichtungen;
- Fig. 3.: eine perspektivische Teilansicht einer Wurfschei- be mit Wurfflügeln von oben bei kleinster Flügellänge;
- Fig. 4.: eine Teilansicht der Wurfscheibe von oben mit dem Wurfflügel in einer mittleren Auszugslänge und in der gleichen Winkelposition wie in Fig. 3;
- Fig. 5.: eine Teilansicht auf die Wurfscheibe in der Posi- tion des Wurfflügels gemäß Fig. 3 mit dem Hebel zum Ausheben des Rastbolzens und Verstellen des Wurfflügels und
- Fig. 6.: eine Stirnansicht des Wurfflügels und der Wiedergabe der Führung des äußeren Flügelteils am inneren Flügelteil.

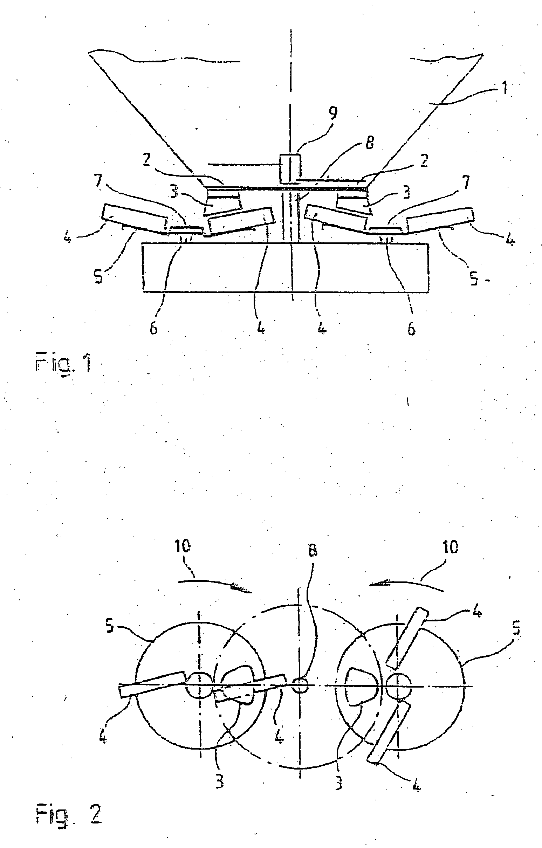

Der Zweischeibenstreuer gemäß Fig. 1, der beispielsweise vom Dreipunktgestänge eines Schleppers aufgenommen wird, weist einen das Streugut aufnehmenden Behälter 1 auf. Der Behälter 1 weist zwei Auslauföffnung 2 mit je einer darunter angeordneten Dosiereinrichtung und einem Auslaufschacht 3 auf, unterhalb dessen mit geringem Abstand die Wurfflügel 4 je einer Schleuderscheibe 5 umlaufen. Die Schleuderscheiben 5 sitzen auf Antriebswellen 6, an denen sie mittels Verschlussnaben 7 befestigt sind. Die Antriebswellen 6 werden von der Zapfwelle des Schleppers über ein Getriebe angetrieben, dessen Gehäuse in Fig. 1 schematisch angedeutet ist. Das Getriebe weist eine weitere Welle 8 für ein im Behälter 1 umlaufendes Rührwerk 9 auf. Statt des mechanischen Antriebs kann selbstverständlich auch ein hydraulischer oder elektrischer Antrieb für die Schleuderscheiben und das Rührwerk vorgesehen sein. Die beiden Schleuderscheiben 5 sind so montiert, dass die Wurfflügel 4 um 90° zueinander versetzt sind, wie dies Fig. 2 zeigt. Im übrigen drehen die Schleuderscheiben 5 entgegen dem bzw. im Uhrzeigersinn, wie mit den Richtungspfeilen 10 in Fig. 2 angedeutet ist.

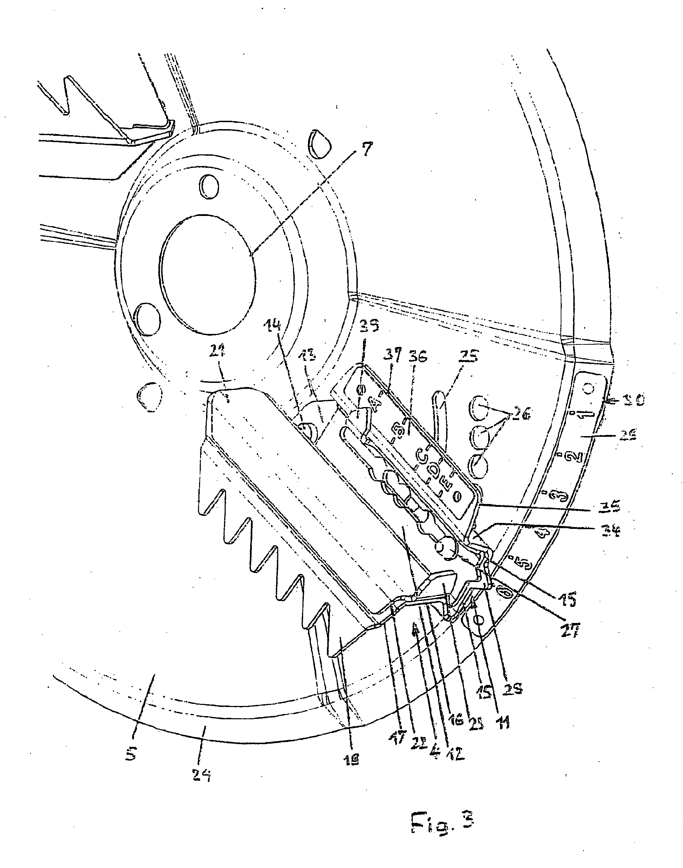

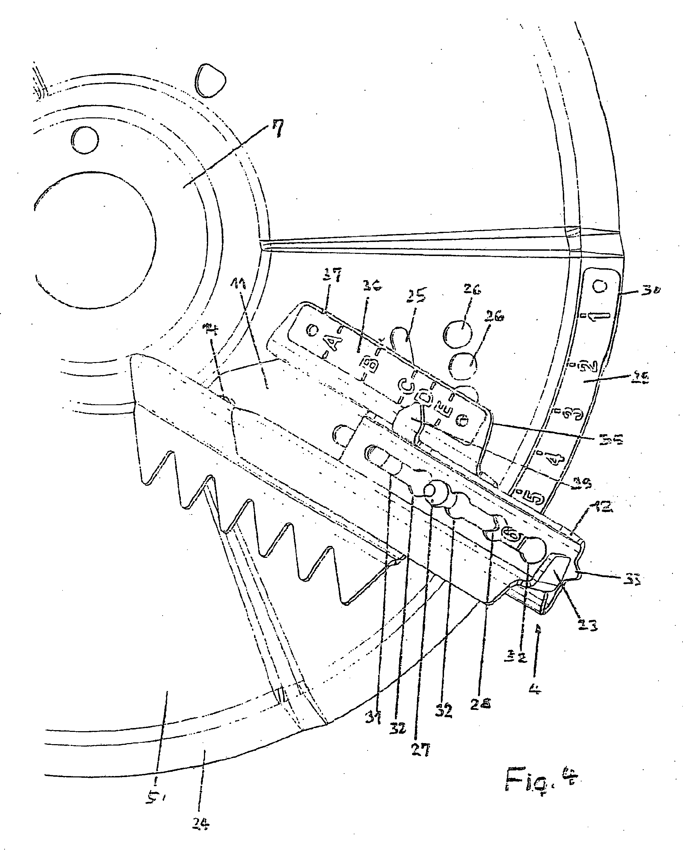

In den Fig. 3 bis 6 ist jeweils nur ein Wurfflügel 4 wiedergegeben. Jeder Wurfflügel 4 besteht aus einem inneren Flügelteil 11 und einem äußeren Flügelteil 12. Das innere Flügelteil 11 ist nahe seinem inneren Ende 13 an einer Achse 14 schwenkbar gelagert. An seinen scheibenparallelen Schenkel 15 schließt ein nach oben etwa senkrecht verlaufender Abschnitt 16 und daran ein in Drehrichtung abgewinkelter Schenkel 17 mit einer kammartigen Leiste an, die bei Umlauf der Wurfscheibe 5 die den Auslaufschacht 3 verlassenden Düngerpartikel einfängt, die durch den Wurfflügel nach außen beschleunigt werden.

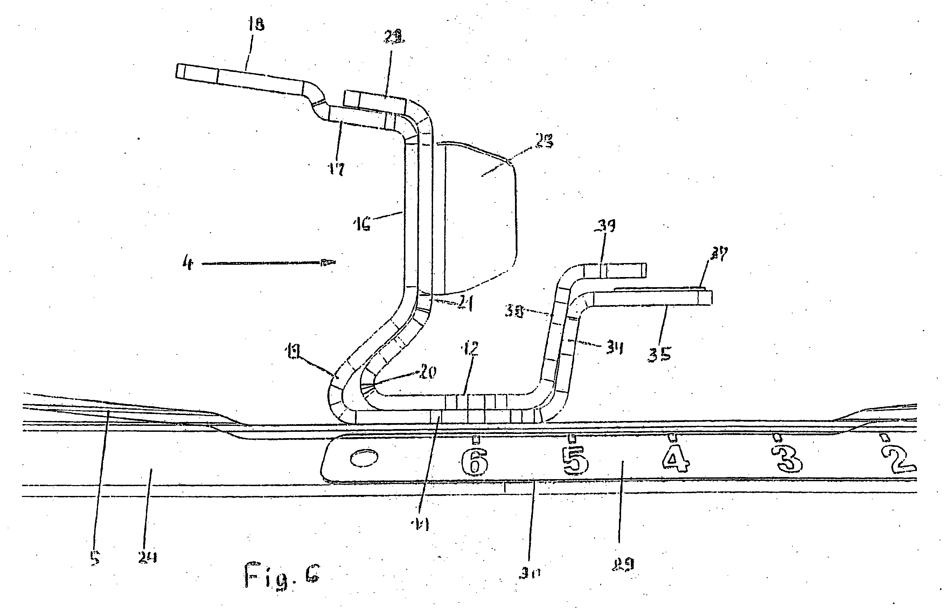

Das äußere Flügelteil 12 ist an dem inneren Flügelteil 11 verschiebbar geführt, wie insbesondere aus Fig. 6 erkennbar. Zu diesem Zweck weist das innere Flügelteil 11 vor seinem Übergang in den senkrechten Schenkel 16 einen in Drehrichtung weisenden V-förmigen Knick 19 auf, in den das äußere Flügelteil 12 mit einem etwa formgleichen Knick 20 eingreift. Das äußere Flügelteil 12 geht im Anschluss an den Knick 20 in einen zu dem senkrecht Abschnitt 16 des inneren Flügelteils parallelen Abschnitt 21 über, der wiederum an seinem Ende in einem in Drehrichtung abgebogenen und zu dem Abschnitt 17 des inneren Flügelteils 11 parallelen Abschnitt 22 abgebogen ist. Im Bereich des oberen Endes des äußeren Flügelteils 12 ist eine entgegen der Fahrtrichtung abgebogene Lasche 23 angeordnet, die als Handhabe zum Ausziehen und Einschieben des äußeren Flügelteils 12 dient.

Die Wurfscheibe 5 weist einen nach unten abgebogenen Umfangsrand 24 und in der Scheibenebene ein zum Schwenkzentrum 14 des inneren Flügelteils 11 konzentrisches Langloch 25 sowie zu diesem konzentrische Bohrungen 26 zum Führen und Positionieren des inneren Flügelteils 11 in einer gewünschten Winkelposition auf. Hierzu dient ferner der federbelastete Bolzen 27, der je nach Winkel-Einstellung in eine der Bohrungen 26 rastend eingreift. Die Winkelposition wird durch einen Zeiger 28 angezeigt, der mit einer Markierung 29 auf dem abgebogenen Umfangsrand 24 der Wurfscheibe 5 zusammenwirkt. Die Markierung für die Winkelposition besteht aus erhabenen Zahlen, die auf einer nicht rostenden Skala 30 ausgeformt sind.

In Fig. 3 ist der Wurfflügel in der kürzesten Länge, also bei eingeschobenen äußeren Flügelteil 12 gezeigt. Das äußere Flügelteil 12 ist mit einem sich über einen weiten Teil seines scheibenparallel erstreckenden Schenkels verlaufenden Langloch 31 versehen, das an seinen Längsrändern mit teilkreisförmigen Erweiterungen 32 versehen ist, in die der federbelastete Bolzen 27 eingreift. Durch das Langloch 31 sind die Buchstaben der Markierung 29 an der Skala 30 erkennbar, so dass die Winkeleinstellung bei jeder Längeneinstellung des Wurfflügels ablesbar bleibt. Zur Erleichterung der Ablesbarkeit weist auch das äußere Flügelteil einen Zeiger 33 auf, der zum Ablesen mit der durch das Langloch 31 sichtbaren Zahl für den eingestellten Winkel optisch ausgefluchtet werden kann.

Das innere Flügelteil 11 weist einen nach oben gerichteten Schenkel 34 und daran anschließend einen entgegen der Drehrichtung abgebogenen Schenkel 35 auf (siehe insbesondere Fig. 6), auf dem die Markierung 36 für die Längeneinstellung angeordnet ist. Sie befindet sich wiederum auf einer nicht rostenden Skala 37, die am Schenkel 35 angenietet ist. Die Markierung für die Längeneinstellung besteht aus erhabenen Buchstaben. Zum Ablesen dient ein an dem etwa vertikalen und zum Schenkel 34 parallelen Schenkel abgebogener Zeiger 39, der die Skala 37 übergreift und mit der Buchstaben-Markierung 36 zusammenwirkt. Auch die Buchstaben der Markierung 36 sind erhaben ausgebildet. Der abgebogene Schenkel 35 liegt mit einem Abstand oberhalb der Scheibenebene, der etwa 30% bis 50% der Höhe des Wurfflügels 4 im Bereich der Kammleiste 18 entspricht. Die Markierung 36 ist dadurch gut ablesbar und vor Staub und Schmutz geschützt.

Die Skalen 30 und 37 sind jeweils mit dem abgehobenen Umfangsrand 24 der Wurfscheibe 5 bzw. mit dem entgegen der Fahrtrichtung abgehobenen Schenkel 35 des inneren Flügelteils 11 vernietet. Sie bestehen beide aus nicht rostendem Stahl.

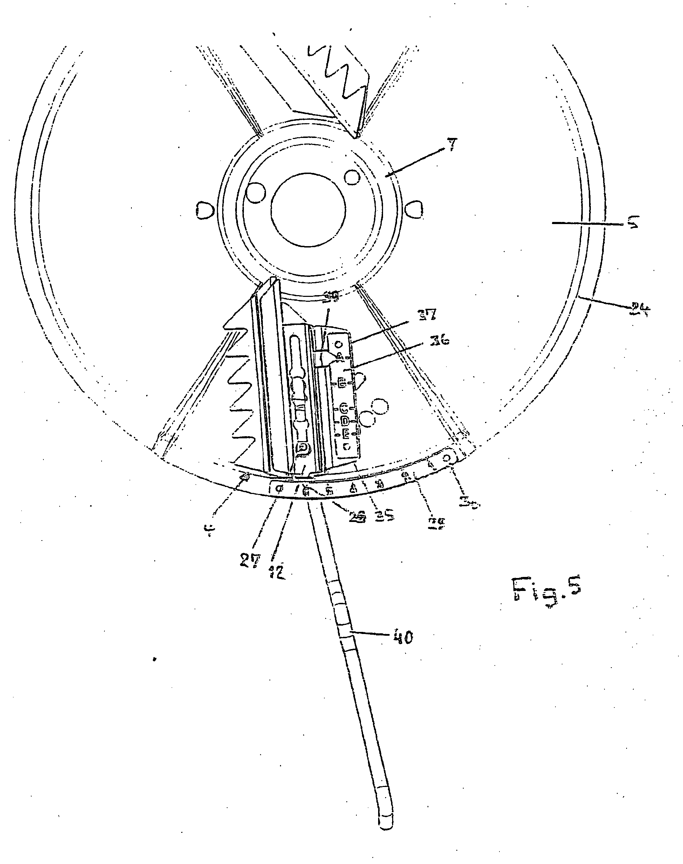

Fig. 5 zeigt ein Ausführungsbeispiel für die Möglichkeit der Einstellung bzw. Verstellung des Wurfflügels hinsichtlich seiner Winkelposition. Diesem Zweck dient ein schlanker, stangenförmiger Hebel 40, der unterhalb der Wurfscheibe 5 in eine Bohrung oder in ein Durchgangsloch des federbelasteten Bolzens 27 eingesteckt wird. Durch Druck nach unten kann der Bolzen 27 aus der Bohrung 26 in der Scheibe 5 nach unten ausgehoben und der Wurfflügel entlang der Skala 30 auf die gewünschte Winkelposition eingestellt werden. In der eingesteckten Lage ist der Hebel 40 etwa auf die Markierung (Buchstabe) in der gerade eingestellten Winkelposition ausgerichtet. Auch dadurch wird die Ablesbarkeit erleichtert. Die den Bolzen belastende Feder ist auf der Unterseite der Wurfscheibe angeordnet.

Für die Verstellung der Wurfflügellänge wird gleichfalls der Hebel 40 eingesetzt, um den federbelasteten Bolzen 27 auszuheben. Es wird dann das äußere Flügelteil 12 von Hand auf die gewünschte Markierung 36 an der Skala 37 ausgezogen und der Bolzen 27 durch Freigabe des Hebels 40 wieder in eine der teilkreisförmigen Erweiterungen des Langlochs 31 eingerastet.

**Bezugszeichenliste**

| | | | |
|---|---|---|---|
| 1 | Behälter | 21 | senkrechter Abschnitt |
| 2 | Auslauföffnung | 22 | in Drehrichtung abgebogener |
| 3 | Auslaufschacht | | Abschnitt |
| 4 | Wurfflügel | 23 | Lasche (Handhabe) |
| 5 | Wurfscheibe | 24 | abgebogener Umfangsrand |
| 6 | Antriebswelle | 25 | Langloch |
| 7 | Nabe | 26 | Bohrungen |
| 8 | Rührwerkwelle | 27 | Bolzen |
| 9 | Rührwerk | 28 | Zeiger |
| 10 | Drehrichtung | 29 | Zahlen-Markierung |
| 11 | inneres Flügelteil | 30 | Skala |
| 12 | äußeres Flügelteil | 31 | Langloch |
| 13 | inneres Ende | 32 | teilkreisförmige Erweiterung |
| 14 | Schwenklager | 33 | Zeiger |
| 15 | scheibenparalleler Schenkel | 34 | senkrechter Schenkel |
| 16 | senkrechter Schenkel | 35 | abgebogener Schenkel |
| 17 | in Drehrichtung | 36 | Markierung |
| | abgewinkelter Schenkel | 37 | Skala |
| 18 | Kammleiste | 38 | Schenkel |
| 19 | V-förmiger Knick | 39 | Zeiger |
| 20 | V-förmiger Knick | 40 | Hebel |

## Patentansprüche

1. Schleuderstreuer für rieselfähiges Streugut mit einem Vorratsbehälter (1) mit wenigstens einer Auslauföffnung (2) und dieser zugeordneten Dosiereinrichtung und wenigstens einer Wurfscheibe (5), die unterhalb der Dosiereinrichtung umläuft und wenigstens einen zweiteiligen Wurfflügel (4) aufweist, dessen inneres Flügelteil (11) zur Anstellung des Wurfflügels (4) in der Scheibenebene nahe dem Zentrum der Wurfscheibe schwenkbar gelagert und mit Abstand davon in der Wurfscheibe geführt ist und dessen äußeres Flügelteil (12) gegenüber dem inneren mittels eines Langlochs (31) zur Einstellung der Flügellänge verschiebbar geführt ist, wobei Führungen (25, 26 bzw. 31) für die Wurfflügelteile (11, 12) an der Wurfscheibe (5) und an dem äußeren Flügelteil (12) einander kreuzend angeordnet sind und ein einziges Feststellmittel (27) mit einem beide Führungen im Kreuzungspunkt durchgreifenden Rastmittel vorgesehen ist und dem Verstellbereich für die Winkellage des Wurfflügels (4) und für die Flügellänge Markierungen (29, 36) mit jeweils verschiedenen Symbolen zugeordnet sind, **dadurch gekennzeichnet, dass** die Markierung (36) für den Verstellbereich der Flügellänge an einem entgegen der Drehrichtung abgewinkelten Schenkel (35) des inneren Flügelteils (11) angeordnet und dieser Markierung ein Zeiger (39) zugeordnet ist, und dass die Markierung (29) für die Winkelverstellung des Wurfflügels (4) an dem nach unten abgebogenen Umfangsrand (24) der Wurfscheibe (5) angeordnet und ihr ein Zeiger (28) am Ende des inneren Flügelteils (11) zugeordnet ist.

2. Schleuderstreuer nach Anspruch 1, **dadurch gekennzeichnet, dass** der Zeiger (39) für die Längeneinstellung scheibenparallel am äußeren Wurfflügel (12) angeordnet ist.

3. Schleuderstreuer nach Anspruch 1 oder 2, **dadurch gekennzeichnet, dass** der Zeiger (39) entgegen der Drehrichtung (10) abgewinkelt ist und den abgewinkelten Schenkel (35) des inneren Flügelteils (11) übergreift.

4. Schleuderstreuer nach einem der Ansprüche 1 bis 3, **dadurch gekennzeichnet, dass** der Zeiger (39) an einem etwa vertikalen Schenkel (38) des äußeren Flügelteils (12) angeordnet und entgegen der Drehrichtung (10) abgewinkelt ist.

5. Schleuderstreuer nach einem der Ansprüche-1 bis 4, **dadurch gekennzeichnet, dass** sich der abgewinkelte scheibenparallele Schenkel (35) des inneren Flügelteils (4) in einer Höhe von etwa 30% bis 50% der Höhe des Wurfflügels (4) befindet.

6. Schleuderstreuer nach einem der Ansprüche 1 bis 5, **dadurch gekennzeichnet, dass** das innere Flügelteil (11) bis zum Umfangsrand der Wurfscheibe (5) reicht und an seinem äußeren Ende den mit der Markierung (29) am nach unten abgebogenen Umfangsrand (24) zusammenwirkenden Zeiger (28) aufweist.

7. Schleuderstreuer nach einem der Ansprüche 1 bis 6, **dadurch gekennzeichnet, dass** das äußere Flügelteil (12) am äußeren Ende einen Zeiger (33) aufweist.

8. Schleuderstreuer nach einem der Ansprüche 1 bis 7, **dadurch gekennzeichnet, dass** die Sicht- und Bezugsachse für die Winkellage des Wurfflügels (4) sich hinter dem Wurfflügel befindet.

9. Schleuderstreuer nach einem der Ansprüche 1 bis 9, **dadurch gekennzeichnet, dass** die Führung für das schwenkbare innere Flügelteil (11) aus einem bogenförmigen Langloch (25) gebildet ist und diesem auf Abstand angeordnete Bohrungen (26) konzentrisch zugeordnet sind, mit denen ein federbelasteter Rastbolzen (27) zum Fixieren der Winkellage zusammenwirkt, dass das äußere Flügelteil (12) in seinem scheibenparallelen Schenkel ein sich von innen und außen erstreckendes Langloch (31) mit an beiden Längsrändern teilkreisförmigen Erweiterungen (32) für den Eingriff des Rastbolzens (27) aufweist.

10. Schleuderstreuer nach einem der Ansprüche 1 bis 9, **dadurch gekennzeichnet, dass** der federbelastete Rastbolzen (27) mittels eines Hebels aushebbar ist, der den Umfangsrand der Wurfscheibe überragt und etwa die Winkelposition anzeigt.

11. Schleuderstreuer nach einem der Ansprüche 1 bis 10, **dadurch gekennzeichnet, dass** im ausgezogenen Zustand des äußeren Flügelteils (12) die Markierungen (29) auf dem nach unten abgebogenen Umfangsrand (24) der Wurfscheibe (5) durch das Langloch (31) in diesem Flügelteil (12) ablesbar sind.

12. Schleuderstreuer nach einem der Ansprüche 1 bis 11, **dadurch gekennzeichnet, dass** die Markierungen (29) für die Winkelposition Zahlen sind.

13. Schleuderstreuer nach einem der Ansprüche 1 bis 11, **dadurch gekennzeichnet, dass** die Markierungen (36) für die Flügellänge Buchstaben sind.

14. Schleuderstreuer nach Anspruch 12, **dadurch gekennzeichnet, dass** die Zahlen erhaben sind.

15. Schleuderstreuer nach Anspruch 13, **dadurch gekennzeichnet, dass** die Buchstaben erhaben sind.

16. Schleuderstreuer nach einem der Ansprüche 1 bis 15, **dadurch gekennzeichnet, dass** die Markierungen (29, 36) an nicht rostenden Skalen (30, 37) angeordnet sind.

17. Schleuderstreuer nach einem der Ansprüche 1 bis 16, **dadurch gekennzeichnet, dass** die Skalen (30, 37) am nach unten gebogenen Umfangsrand (24) der Wurfscheibe (5) bzw. an dem entgegen der Drehrichtung abgebogenen Schenkel (35) des inneren Flügelteils (11) angenietet sind.

## Claims

1. Centrifugal spreader for pourable materials, with a storage container (1) having at least one discharge opening (2) and metering device assigned thereto and at least one spreading disc (5) which revolves below the metering device and has at least one two-part spreading wing (4), the inner wing part (11) of which is mounted pivotably for positioning the spreading wing (4) in the plane of the disc in the vicinity of the centre of the spreading disc, and is guided in the spreading disc at a distance therefrom and the outer wing part (12) of which is guided displaceably in relation to the inner wing part by means of an elongated hole (31) in order to set the wing length, wherein guides (25, 26 and 31) for the spreading wing parts (11, 12) are arranged on the spreading disc (5) and on the outer wing part (12) in a manner intersecting one another, and a single fixing means (27) with a latching means reaching through the two guides at the intersecting point is provided, and markings (29, 36) having different symbols in each case are assigned to the adjustment range for the angular position of the spreading wing (4) and for the wing length, **characterized in that** the marking (36) for the adjustment range of the wing length is arranged on a limb (35) of the inner wing part (11), which limb is angled counter to the direction of rotation, and an indicator (39) is assigned to said marking, and **in that** the marking (29) for the angular adjustment of the spreading wing (4) is arranged on the downwardly bent circumferential edge (24) of the spreading disc (5) and an indicator (28) at the end of the inner wing part (11) is assigned to said marking.

2. Centrifugal spreader according to Claim 1, **characterized in that** the indicator (39) for the setting of the length is arranged on the outer spreading wing (12) in a disc-parallel manner.

3. Centrifugal spreader according to Claim 1 or 2, **characterized in that** the indicator (39) is angled counter to the direction of rotation (10) and engages over the angled limb (35) of the inner wing part (11).

4. Centrifugal spreader according to one of Claims 1 to 3, **characterized in that** the indicator (39) is arranged on an approximately vertical limb (38) of the outer wing part (12) and is angled counter to the direction of rotation (10).

5. Centrifugal spreader according to one of Claims 1 to 4, **characterized in that** the angled disc-parallel limb (35) of the inner wing part (4) is at a height of approximately 30% to 50% of the height of the spreading wing (4).

6. Centrifugal spreader according to one of Claims 1 to 5, **characterized in that** the inner wing part (11) reaches as far as the circumferential edge of the spreading disc (5) and, at its outer end, has the indicator (28) which interacts with the marking (29) on the downwardly bent circumferential edge (24).

7. Centrifugal spreader according to one of Claims 1 to 6, **characterized in that** the outer wing part (12) has an indicator (33) at the outer end.

8. Centrifugal spreader according to one of Claims 1 to 7, **characterized in that** the viewing and reference axis for the angular position of the spreading wing (4) is located behind the spreading wing.

9. Centrifugal spreader according to one of Claims 1 to 8, **characterized in that** the guide for the pivotable inner wing part (11) is formed from an arcuate elongated hole (25) and the latter is concentrically assigned bores (26) which are arranged at a distance and with which a spring-loaded latching bolt (27) interacts in order to fix the angular position, **in that** the outer wing part (12) in the disc-parallel limb thereof has an elongated hole (31) which extends from the inside and outside with partially circular extensions (32) at the two longitudinal edges for the engagement of the latching bolt (27).

10. Centrifugal spreader according to one of Claims 1 to 9, **characterized in that** the spring-loaded latching bolt (27) can be lifted by means of a lever which protrudes over the circumferential edge of the spreading disc and approximately indicates the angular position.

11. Centrifugal spreader according to one of Claims 1 to 10, **characterized in that**, in the extended state of the outer wing part (12), the markings (29) on the downwardly bent circumferential edge (24) of the spreading disc (5) are readable through the elongated hole (31) in said wing part (12).

12. Centrifugal spreader according to one of Claims 1 to 11, **characterized in that** the markings (29) for the angular position are numbers.

13. Centrifugal spreader according to one of Claims 1 to 11, **characterized in that** the markings (36) for the wing length are letters.

14. Centrifugal spreader according to Claim 12, **characterized in that** the numbers are raised.

15. Centrifugal spreader according to Claim 13, **characterized in that** the letters are raised.

16. Centrifugal spreader according to one of Claims 1 to 15, **characterized in that** the markings (29, 36) are arranged on rustproof scales (30, 37).

17. Centrifugal spreader according to one of Claims 1 to 16, **characterized in that** the scales (30, 37) are riveted onto the downwardly bent circumferential edge (24) of the spreading disc (5) or onto that limb (35) of the inner wing part (11) which is bent counter to the direction of rotation.

## Revendications

1. Épandeur d'engrais centrifuge pour un produit dispersible pouvant ruisseler, avec un réservoir (1) équipé d'au moins une ouverture de dispersion (2) et du dispositif de dosage y étant associé et au moins un disque éjecteur (5) tournant en dessous du dispositif de dosage et comportant au moins une pale éjectrice (4) en deux parties dont la partie de pale (11) intérieure est disposée de façon à pouvoir pivoter pour faire fonctionner la pale éjectrice (4) dans le plan de disque à proximité du centre du disque éjecteur et est guidée dans le disque éjecteur à une certaine distance de lui et dont la partie de pale (12) extérieure peut être guidée de façon coulissante par rapport à la partie intérieure à l'aide d'un trou oblong (31) pour le réglage de la longueur de pale, des guides pour les parties de pale éjectrice (25, 26 et/ou 31) étant disposés de façon à se croiser l'un l'autre au niveau du disque éjecteur (5) et au niveau de la partie de pale extérieure (12) et un seul moyen d'arrêt (27) étant pourvu d'un moyen d'encliquetage s'engrenant avec un des deux guides au niveau du point d'intersection et des marquages (29, 36) avec respectivement des symboles différents étant associés à la zone de réglage de la position angulaire de la pale éjectrice (4) et de la longueur de pale, **caractérisé en ce que** le marquage (36) est disposé pour la zone de réglage de la longueur de pale au niveau d'un côté (35), formant un coude allant contre la direction de rotation, de la partie de pale (11) intérieure et un pointeur (39) étant associé à ce marquage et que le marquage (29) est disposé au niveau de la bordure périphérique (24) incurvée vers le bas du disque éjecteur (5) pour le réglage d'angle de la pale éjectrice (4) et un pointeur (28) lui étant associé au niveau de l'extrémité de la partie de pale (11) intérieure.

2. Épandeur d'engrais centrifuge selon la revendication 1, **caractérisé en ce que** le pointeur (39) est disposé au niveau de la pale éjectrice (12) extérieure pour le réglage de longueur, parallèlement au disque.

3. Épandeur d'engrais centrifuge selon la revendication 1 ou 2, **caractérisé en ce que** le pointeur (39) est coudé contre la direction de rotation (10) et agrippe par au-dessus le côté (35) coudé de la partie de pale (11) intérieure.

4. Épandeur d'engrais centrifuge selon l'une quelconque des revendications 1 à 3, **caractérisé en ce que** le pointeur (39) est disposé au niveau d'un côté (38) approximativement vertical de la partie de pale (12) extérieure et est coudé contre la direction de rotation (10).

5. Épandeur d'engrais centrifuge selon l'une quelconque des revendications 1 à 4, **caractérisé en ce que** le côté (35) parallèle au disque coudé de la partie de pale (4) intérieure se trouve à une hauteur d'approximativement 30 % à 50 % de la hauteur de la pale éjectrice (4).

6. Épandeur d'engrais centrifuge selon l'une quelconque des revendications 1 à 5, **caractérisé en ce que** la partie de pale (11) intérieure va jusqu'à atteindre la bordure périphérique du disque éjecteur (5) et comporte au niveau de son extrémité extérieure le pointeur (28) interagissant avec le marquage (29) au niveau de la bordure périphérique (24) coudée vers le bas.

7. Épandeur d'engrais centrifuge selon l'une quelconque des revendications 1 à 6, **caractérisé en ce que** la partie de pale (12) extérieure comporte un pointeur (33) au niveau de l'extrémité extérieure.

8. Épandeur d'engrais centrifuge selon l'une quelconque des revendications 1 à 7, **caractérisé en ce que** l'axe de référence et de vue pour la position angulaire de la pale éjectrice (4) se situe derrière la pale éjectrice.

9. Épandeur d'engrais centrifuge selon l'une quelconque des revendications 1 à 9, **caractérisé en ce que** le guide pour la partie de pale (11) intérieure pouvant pivoter est formé d'un trou oblong (25) de forme arquée et que des alésages (26) disposés à cette distance lui sont associés concentriquement, un boulon d'encliquetage (27) sollicité par ressort interagissant avec lesdits alésages pour fixer la position angulaire, que la partie de pale (12) extérieure comporte dans son côté parallèle au disque un trou oblong (31) s'étendant de l'intérieur et de l'extérieur avec des élargissements (32) en forme de cercle primitif au niveau des deux bordures longitudinales pour réaliser la préhension du boulon d'encliquetage (27).

10. Épandeur d'engrais centrifuge selon l'une quelconque des revendications 1 à 9, **caractérisé en ce que** le boulon d'encliquetage (27) sollicité par ressort peut être sorti à l'aide d'un levier et ressort de la bordure périphérique du disque éjecteur et affiche approximativement la position angulaire.

11. Épandeur d'engrais centrifuge selon l'une quelconque des revendications 1 à 10, **caractérisé en ce qu'**à l'état sorti de la partie de pale (12) extérieure, les marquages (29) peut être lus sur la bordure périphérique (24) coudée vers le bas du disque éjecteur (5), au travers du trou oblong (31) prévu dans cette partie de pale (12).

12. Épandeur d'engrais centrifuge selon l'une quelconque des revendications 1 à 11, **caractérisé en ce que** les marquages (29) prévus pour la position angulaire sont des nombres.

13. Épandeur d'engrais centrifuge selon l'une quelconque des revendications 1 à 11, **caractérisé en ce que** les marquages (36) prévus pour la longueur de pale sont des lettres.

14. Épandeur d'engrais centrifuge selon la revendication 12, **caractérisé en ce que** les nombres sont en relief.

15. Épandeur d'engrais centrifuge selon la revendication 13, **caractérisé en ce que** les lettres sont en relief.

16. Épandeur d'engrais centrifuge selon l'une quelconque des revendications 1 à 15, **caractérisé en ce que** les marquages (29, 36) sont disposés au niveau de cadrans (30, 37) non oxydables.

17. Épandeur d'engrais centrifuge selon l'une quelconque des revendications 1 à 16, **caractérisé en ce que** les cadrans (30, 37) sont rivetés au niveau de la bordure périphérique (24) incurvée vers le bas du disque éjecteur (5) et/ou au niveau du côté (35) coudé contre la direction de rotation de la partie de pale intérieure (11).
